# FASCICULE DE BREVET EUROPEEN

(11) **EP 3 083 807 B1**
(45) Date de publication et mention de la délivrance du brevet: **05.02.2020**
(21) Numéro de dépôt: 14815370.3
(22) Date de dépôt: 19.12.2014
(51) Int. Cl.: C08L 7/00, C08L 53/02, B60C 1/00, C08K 3/04, C08K 3/36

(54) **BANDE DE ROULEMENT POUR PNEUMATIQUE COMPORTANT UN ELASTOMERE THERMOPLASTIQUE**
REIFENLAUFFLÄCHE MIT EINEM THERMOPLASTISCHEN ELASTOMER
TIRE TREAD COMPRISING A THERMOPLASTIC ELASTOMER

(30) Priorité: 20.12.2013 FR 1363143
(43) Date de publication de la demande: 26.10.2016
(73) Titulaire: Compagnie Générale des Etablissements Michelin, 63000 Clermont-Ferrand (FR)
(72) Inventeur: CHOUVEL, Christophe, F-63040 Clermont-Ferrand Cedex 9 (FR); ARAUJO DA SILVA, José-Carlos, F-63040 CLERMONT-FERRAND Cedex 9 (FR)
(74) Mandataire: Wroblewski, Nicolas Paul André
(86) Numéro de dépôt international: PCT/EP2014/078691
(87) Numéro de publication internationale: WO 2015/091926

(56) Documents cités:
- EP-A1- 0 831 121
- WO-A1-2011/076635
- US-B1- 8 557 937

## Description

Le domaine de la présente invention est celui des bandes de roulement pour pneumatiques.

Au cours du roulage, une bande de roulement de pneumatique subit des sollicitations mécaniques et des agressions résultant du contact direct avec le sol, ce qui a pour effet de créer des amorces de fissure dans la bande de roulement. Ces sollicitations et ces agressions s'exercent sur la bande de roulement de façon cyclique à chaque tour de roue. Cette périodicité a pour conséquence que les amorces de fissure qui se créent dans la bande de roulement, ont tendance à se propager en surface ou à l'intérieur de la bande de roulement. La propagation de fissures dans la bande de roulement peut entrainer un endommagement de la bande de roulement et donc réduire la durée de vie de la bande de roulement ou du pneumatique.

Il est donc important de disposer de pneumatiques dont la bande de roulement présente une résistance à la propagation de fissure suffisamment forte pour minimiser l'effet d'une amorce de fissure sur la durée de vie de la bande de roulement. Pour résoudre ce problème, les manufacturiers de pneumatique utilisent par exemple du caoutchouc naturel dans les bandes de roulement en raison des propriétés de résistance à la propagation de fissure du caoutchouc naturel comme mentionné dans « Table 3.7 Comparison of elastomers properties » p. 162-163, Rubber Technology Handbook Hofmann, Hanser publishers (1989).

Néanmoins il existe toujours un besoin d'améliorer encore la résistance à la propagation de fissure des bandes de roulement de pneumatique.

Les Demanderesses ont découvert que l'introduction d'un certain taux d'élastomère thermoplastique styrénique insaturé spécifique dans une composition de caoutchouc spécifique utilisée en tant que bande de roulement d'un pneumatique permet d'améliorer la résistance à la propagation de fissure sans détérioration substantielle des autres performances de la bande de roulement que sont l'usure et la résistance au roulement.

Ainsi un premier objet de l'invention est une bande de roulement pour pneumatique comprenant une composition à base d'au moins :
- une matrice élastomère comprenant un polyisoprène et un élastomère thermoplastique styrénique insaturé qui représente au plus 50% en masse de la matrice élastomère, lequel élastomère thermoplastique styrénique insaturé comprend au moins un segment rigide styrénique et au moins un segment souple isoprénique, lequel l'au moins un segment souple isoprénique a une température de transition vitreuse inférieure à -20°C,
- une charge renforçante,
- un système de réticulation,
dans laquelle, le taux d'élastomère thermoplastique styrénique insaturé représente de 5 à 50% en masse de la masse de la matrice élastomère.

L'invention a aussi pour objet un pneumatique qui comprend la bande de roulement conforme à l'invention.

L'invention a également pour objet un procédé pour préparer la bande de roulement conforme à l'invention.

Un autre objet de l'invention est une composition de caoutchouc identique à la composition de la bande de roulement conforme à l'invention, avec la condition que si la charge renforçante comprend un noir de carbone, le noir de carbone présente une surface spécifique BET supérieure ou égale à 90 m²/g.

L'invention a aussi pour objet un procédé pour préparer la composition de caoutchouc conforme à l'invention.

### I. MESURES ET TESTS UTILISES

### Résistance à la propagation de fissure :

La vitesse de fissuration a été mesurée sur des éprouvettes de compositions de caoutchouc, à l'aide d'une machine de fatigue cyclique (« *Elastomer Test System* ») du type 381, de la société MTS, comme expliqué ci-après.

La résistance à la fissuration est mesurée à l'aide de tractions répétées sur une éprouvette initialement accommodée (après un premier cycle de traction), puis entaillée. L'éprouvette de traction est constituée par une plaque de caoutchouc de forme parallélépipédique, par exemple d'épaisseur comprise entre 1 et 2 mm, de longueur entre 130 et 170 mm et de largeur entre 10 et 15 mm, les deux bords latéraux étant chacun recouverts dans le sens de la longueur d'un bourrelet de caoutchouc cylindrique (diamètre 5 mm) permettant l'ancrage dans les mors de la machine de traction. Les éprouvettes ainsi préparées sont testées à l'état neuf. Le test a été conduit à l'air, à une température de 20°C, 60°C ou 80°C. Après accommodation, 3 entailles très fines de longueur comprise entre 15 et 20 mm sont réalisées à l'aide d'une lame de rasoir, à mi-largeur et alignées dans le sens de la longueur de l'éprouvette, une à chaque extrémité et une au centre de cette dernière, avant le démarrage du test. A chaque cycle de traction, le taux de déformation de l'éprouvette est ajusté automatiquement de manière à maintenir constant le taux de restitution d'énergie (quantité d'énergie libérée lors de la progression de la fissure), à une valeur inférieure ou égale à environ 500 J/m². La vitesse de propagation de fissure est mesurée en nanomètre par cycle. La résistance à la propagation de fissure sera exprimée en unités relatives (u.r.) en divisant la vitesse de propagation du témoin par celle du mélange, les vitesses étant mesurées au même taux de restitution d'énergie. Une valeur supérieure à celle du témoin, arbitrairement fixée à 100, indique un résultat amélioré c'est-à-dire une résistance supérieure à la propagation de fissures.

### II- DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomères présents dans la matrice élastomère, la matrice élastomère désignant la totalité des élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

La matrice élastomère de la composition de caoutchouc a pour caractéristique essentielle de comprendre un polyisoprène. Le polyisoprène peut être un élastomère de toute microstructure. De préférence le polyisoprène comporte un taux massique de liaison 1,4-cis d'au moins 90% de la masse du polyisoprène. Comme polyisoprène ayant cette microstructure préférentielle conviennent le caoutchouc naturel, un polyisoprène de synthèse ou leur mélange.

La matrice élastomère de la composition de caoutchouc de la bande de roulement du pneumatique conforme à l'invention peut contenir un second élastomère diénique. Par second élastomère diénique, on entend un ou plusieurs élastomères diéniques autres que le polyisoprène.

Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a)- tout homopolymère d'un monomère diène conjugué, notamment tout homopolymère obtenu par polymérisation d'un monomère diène conjugué ayant de 4 à 12 atomes de carbone;
(b)- tout copolymère obtenu par copolymérisation d'un ou plusieurs diènes conjugués entre eux ou avec un ou plusieurs composés vinyle aromatique ayant de 8 à 20 atomes de carbone;
(c)- un copolymère ternaire obtenu par copolymérisation d'éthylène, d'une α-oléfine ayant de 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d)- un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en œuvre avec des élastomères diéniques essentiellement insaturés, en particulier du type (a) ou (b) ci-dessus.

Dans le cas de copolymères du type (b), ceux-ci contiennent de 20 à 99% en poids d'unités diéniques et de 1 à 80% en poids d'unités vinylaromatiques.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, paraméthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Préférentiellement, le second élastomère diénique est un élastomère essentiellement insaturé choisi dans le groupe constitué par les polybutadiènes, les copolymères de butadiène, les copolymères d'isoprène, et les mélanges de ces élastomères. A titre d'élastomère diénique convient tout particulièrement un polybutadiène (BR), un copolymère de butadiène et de styrène (SBR).

Selon un mode de réalisation de l'invention, le polyisoprène représente plus de 50% de la différence entre la masse de la matrice élastomère et la masse de l'élastomère thermoplastique styrénique insaturé, ce qui revient à dire que le polyisoprène présente une fraction pondérale supérieure à 50% par rapport à la masse totale des élastomères non thermoplastiques de la matrice élastomère. Selon ce mode de réalisation convient par exemple comme matrice élastomère un mélange constitué de 40% en masse d'un élastomère thermoplastique styrénique insaturé, de 45% en masse d'un caoutchouc naturel et de 15% en masse d'un SBR, les pourcentages étant calculés sur la base de la masse totale de la matrice élastomère.

Selon un autre mode de réalisation de l'invention, le polyisoprène représente plus de 50% en masse de la matrice élastomère. Selon ce mode de réalisation convient par exemple comme matrice élastomère un mélange constitué de 40% en masse d'un élastomère thermoplastique styrénique insaturé, de 55% en masse d'un caoutchouc naturel et de 5% en masse d'un SBR, les pourcentages étant calculés sur la base de la masse totale de la matrice élastomère.

Selon un mode de réalisation préférentiel de l'invention, seuls le polyisoprène et l'élastomère thermoplastique styrénique insaturé constituent la matrice élastomère, ce qui signifie que la matrice élastomère ne contient pas d'autres élastomères que le polyisoprène et l'élastomère thermoplastique styrénique insaturé.

L'élastomère thermoplastique styrénique insaturé comprend au moins un segment rigide styrénique et au moins un segment souple isoprénique, lequel l'au moins un segment souple isoprénique a une température de transition vitreuse inférieure à -20°C. Les segments rigide et souple peuvent être disposés linéairement, en étoile ou branchés.

Un segment souple se réfère à un bloc polymère de type élastomère, un segment rigide se réfère à un bloc polymère de type thermoplastique.

On qualifie un élastomère thermoplastique styrénique d'élastomère thermoplastique styrénique insaturé, lorsque l'au moins un segment souple isoprénique comporte des doubles liaisons carbone-carbone éthyléniques non aromatiques, ces doubles liaisons étant celles des unités isoprène.

On entend par segment souple isoprénique un segment souple qui est constitué au moins en partie d'unités isoprène. L'au moins un segment souple isoprénique est de préférence un bloc polyisoprène. Ce mode de réalisation préférentiel de l'invention s'applique à l'un quelconque des modes de réalisation de l'invention.

Selon un mode de réalisation de l'invention, l'élastomère thermoplastique styrénique insaturé est un dibloc. Le dibloc comporte un seul segment rigide styrénique relié à un seul segment souple isoprénique.

Selon un mode de réalisation préférentiel de l'invention, l'élastomère thermoplastique styrénique insaturé comprend au moins deux segments rigides styréniques. Selon ce mode de réalisation préférentiel de l'invention, généralement au moins deux extrémités de chaînes de l'élastomère thermoplastique styrénique insaturé sont pourvues chacune d'un segment rigide styrénique et les segments rigides styréniques sont reliés par le ou les segments souples isopréniques. Selon ce mode de réalisation préférentiel de l'invention, l'élastomère thermoplastique styrénique insaturé est de préférence un tribloc. Le tribloc est alors constitué de deux segments rigides styréniques et d'un segment souple isoprénique.

Dans le cas où l'élastomère thermoplastique styrénique insaturé est un dibloc, la dénomination de « l'au moins un segment rigide » désigne le segment rigide présent dans l'élastomère thermoplastique styrénique insaturé. Dans les cas différents d'un dibloc, par exemple dans le cas d'un tribloc, la dénomination de « l'au moins un segment rigide » désigne les segments rigides présents dans l'élastomère thermoplastique styrénique insaturé.

Dans le cas où l'élastomère thermoplastique styrénique insaturé est un dibloc ou un tribloc, la dénomination de « l'au moins un segment souple » désigne le segment souple présent dans l'élastomère thermoplastique styrénique insaturé. Dans les cas où l'élastomère thermoplastique styrénique insaturé n'est ni un dibloc, ni un tribloc, la dénomination de « l'au moins un segment souple » désigne les segments souples présents dans l'élastomère thermoplastique styrénique insaturé.

L'au moins un segment rigide styrénique est l'homopolymère d'un monomère styrénique ou le copolymère bloc ou statistique de plusieurs monomères styréniques ou encore le copolymère d'un ou plusieurs monomères styréniques et d'un autre monomère non styrénique tel qu'un 1,3-diène.

Par monomère styrénique doit être entendu dans la présente description le styrène ou un styrène substitué. Parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertiobutylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, l'au moins un segment rigide styrénique présente une température de transition vitreuse supérieure à 80°C. De préférence, l'au moins un segment rigide styrénique est un bloc polystyrène.

Comme élastomère thermoplastique styrénique insaturé conviennent les copolymères diblocs styrène/ isoprène (SI) et les copolymères triblocs styrène/ isoprène/ styrène (SIS).

Comme élastomère thermoplastique styrénique insaturé conviennent aussi les mélanges d'un copolymère tribloc ci-dessus cité et d'un copolymère dibloc ci-dessus cité. En effet le copolymère tribloc peut contenir une fraction minoritaire pondérale de copolymère dibloc constitué d'un segment rigide styrénique et d'un segment souple isoprénique, le bloc rigide et le bloc souple étant respectivement de même nature chimique, en particulier de même microstructure, que les blocs rigide et souple du tribloc. La présence de copolymère dibloc dans le copolymère tribloc résulte généralement du procédé de synthèse du copolymère tribloc qui peut conduire à la formation de produit secondaire comme le copolymère dibloc. Le plus souvent le pourcentage de copolymère dibloc dans le copolymère tribloc n'excède pas 40% en masse de copolymère tribloc.

Selon un mode de réalisation préférentiel de l'invention, le taux massique de l'au moins un segment rigide styrénique est compris entre 5 et 40% de la masse de l'élastomère thermoplastique styrénique insaturé. En dessous du minimum indiqué, le caractère thermoplastique de l'élastomère thermoplastique styrénique insaturé risque de diminuer de manière sensible tandis qu'au-dessus du maximum préconisé, l'élasticité de la composition peut être affectée. Pour ces raisons, le taux massique de l'au moins un segment rigide styrénique dans l'élastomère thermoplastique styrénique insaturé est préférentiellement compris dans un domaine allant de 10 à 35%, plus préférentiellement de 10 à 20% de la masse de l'élastomère thermoplastique styrénique insaturé. Ces taux qu'ils soient préférentiels ou non s'appliquent à l'un quelconque des modes de réalisation de l'invention, tout particulièrement lorsque le polystyrène forme l'au moins un segment rigide styrénique de l'élastomère thermoplastique styrénique insaturé.

La masse molaire moyenne en nombre (notée Mn) de l'élastomère thermoplastique styrénique insaturé est préférentiellement comprise entre 50 000 et 500 000 g/mol, plus préférentiellement comprise entre 60 000 et 450 000 g/mol, encore plus préférentiellement comprise entre 80 000 et 300 000 g/mol. Avantageusement elle est comprise entre 100 000 et 200 000 g/mol. Ces plages préférentielles de valeurs de masse molaire moyenne en nombre s'appliquent quel que soit le mode de réalisation de l'invention.

La masse molaire est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes en nombre calculées sont relatives à une courbe d'étalonnage réalisée avec des étalons de polystyrène.

L'élastomère thermoplastique styrénique insaturé est présent dans une proportion massique **allant de 5 à 50%** de la masse de la matrice élastomère de la composition de caoutchouc de la bande de roulement. Au-dessus de la valeur maximum indiquée, il n'y a plus de bénéfice sur la résistance à la propagation de fissure de la composition de caoutchouc formant la bande de roulement d'un pneumatique. Le taux de l'élastomère thermoplastique styrénique insaturé varie dans un domaine allant préférentiellement de 10 à 45%, encore plus préférentiellement de 20 à 45% en masse de la masse de la matrice d'élastomère. Avantageusement il varie de 25 à 45% en masse de la masse de la matrice élastomère. Lorsque l'élastomère thermoplastique styrénique insaturé est un mélange d'élastomères thermoplastiques styréniques insaturés conformes à l'invention, les taux indiqués s'appliquent au mélange et non à chacun des élastomères thermoplastiques styréniques insaturés. Ces taux qu'ils soient préférentiels ou non s'appliquent à l'un quelconque des modes de réalisation de l'invention.

L'au moins un segment souple isoprénique présente une Tg préférentiellement inférieure à -30°C, plus préférentiellement inférieure à -40°C, encore plus préférentiellement inférieure à -50°C. La température de transition vitreuse est mesurée au moyen d'un calorimètre différentiel ("Differential Scanning Calorimeter") selon la norme ASTM D3418 (1999).

La charge renforçante peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charges.

Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

La charge renforçante peut comprendre un noir de carbone. De préférence, le noir de carbone présente une surface spécifique BET d'au moins 90 m²/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300 (grade ASTM), comme par exemple les noirs N115, N134, N234, N375. De manière plus préférentielle le noir de carbone présente une surface spécifique BET d'au moins 100 m²/g. Les noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0: 0.1 à 0.3].

La charge renforçante peut comprendre une charge inorganique renforçante. Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. On peut citer comme exemple de silice utile pour les besoins de l'invention la silice « Ultrasil VN3 » commercialisée par la société Evonik. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Dans le présent exposé, en ce qui concerne la silice, la surface spécifique BET est déterminée de manière connue par adsorption de gaz à l'aide de la méthode de Brunauer-Emmett-Teller décrite dans *"*The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Pour coupler la charge inorganique renforçante à l'élastomère diénique, on utilise de manière bien connue un agent de couplage, notamment un silane, (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z - A - Sₓ - A - Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 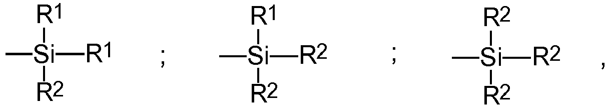 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en œuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azodicarbonyle, tels que décrits par exemple dans les demandes de brevets WO 2006/125532, WO 2006/125533, WO 2006/125534.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

La composition de caoutchouc conforme à l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanolamines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

Selon une variante de l'invention, le noir de carbone représente plus de 50% en masse de la charge renforçante de la composition de caoutchouc. On considère alors le noir de carbone comme la charge renforçante majoritaire.

Selon un mode de réalisation de cette variante, la silice peut être utilisée à des taux allant de 2 pce à 35 pce, de préférence de 3 à 25 pce, et notamment de 5 à 20 pce. Selon ce mode de réalisation, de préférence la composition de caoutchouc contient de 0 à moins de 2 pce d'un agent de couplage, de manière plus préférentielle de 0 à moins de 1 pce d'un agent de couplage, de manière encore plus préférentielle elle ne contient pas d'agent de couplage. Dans le cas où la composition de caoutchouc ne contient pas d'agent de couplage, la silice n'est pas considérée comme une charge renforçante et la composition de caoutchouc contient de préférence un agent de recouvrement qui est préférentiellement un polyéthylène glycol. L'un quelconque mode de réalisation de l'invention s'applique à cette variante ainsi qu'aux formes préférentielles de cette variante.

Selon une autre variante de l'invention, la charge inorganique renforçante, de préférence une silice, représente plus de 50% en masse de la charge renforçante de la composition de caoutchouc. On considère alors que la charge inorganique renforçante est la charge renforçante majoritaire. Selon cette variante dans laquelle la charge inorganique renforçante est la charge renforçante majoritaire, notamment lorsque la silice est la charge renforçante majoritaire, le noir de carbone est utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Le taux de charge renforçante est compris préférentiellement dans un domaine allant de 10 à 160 pce. En deçà de 10 pce, le renforcement de la composition de caoutchouc peut être insuffisant pour apporter un niveau de cohésion ou de résistance à l'usure adéquats du composant caoutchouteux du pneumatique comprenant cette composition. Au-delà de 160 pce, il existe un risque d'augmentation de l'hystérèse de la composition de caoutchouc et donc un risque d'échauffement de la bande de roulement et du pneumatique. Le taux de charge renforçante est plus préférentiellement de 25 pce à 100 pce, encore plus préférentiellement de 35 à 85 pce. Ces taux de charge renforçante, qu'ils soient préférentiels ou non, s'appliquent à l'un quelconque des modes de réalisation de l'invention.

La composition de caoutchouc peut comporter également tout ou partie des additifs usuels habituellement utilisés dans les compositions d'élastomères comme par exemple des plastifiants, des pigments, des agents de protection tels que cires anti-ozone, anti-ozonants chimiques, antioxydants, des agents anti-fatigue, un système de réticulation, des accélérateurs ou retardateurs de vulcanisation, des activateurs de vulcanisation. Selon l'un quelconque mode de réalisation de l'invention, le système de réticulation est de préférence à base de soufre, mais il peut être également à base de donneurs de soufre, de peroxyde, de bismaléimides ou de leurs mélanges.

La composition de caoutchouc peut être fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Le procédé pour préparer la bande de roulement conforme à l'invention comprend par exemple les étapes suivantes :
- ajouter au cours d'une première étape dite non productive à la matrice élastomère, la charge renforçante, le cas échéant l'agent de couplage, en malaxant thermomécaniquement jusqu'à atteindre une température maximale comprise entre 130 et 200°C,
- refroidir l'ensemble à une température inférieure à 70°C,
- incorporer ensuite le système de réticulation,
- malaxer le tout jusqu'à une température maximale inférieure à 90°C pour obtenir un mélange,
- puis calandrer ou extruder le mélange obtenu pour former une bande de roulement.

Quel que soit le mode de réalisation de l'invention, la bande de roulement peut être à l'état cru, (avant réticulation ou vulcanisation) ou à l'état cuit (après réticulation ou vulcanisation).

L'invention concerne également une composition de caoutchouc identique à la composition de caoutchouc de la bande de roulement conforme à l'invention, avec la condition que si la charge renforçante comprend un noir de carbone, le noir de carbone présente une surface spécifique BET supérieure ou égale à 90 m²/g, de préférence supérieure ou égale à 100 m²/g.

La composition de caoutchouc, objet particulier de l'invention, peut être préparée selon un procédé qui comprend les étapes suivantes :
- malaxer thermomécaniquement la matrice élastomère, la charge renforçante, le cas échéant l'agent de couplage, jusqu'à atteindre une température maximale comprise entre 130°C et 200°C ;
- refroidir l'ensemble à une température inférieure à 70°C ;
- incorporer ensuite le système de réticulation ;
- malaxer le tout jusqu'à une température maximale inférieure à 90°C pour obtenir une composition de caoutchouc.

L'invention concerne les compositions, les pneumatiques et les bandes de roulement de pneumatique précédemment décrits tant à l'état cru (c'est à dire, avant cuisson) qu'à l'état cuit (c'est à dire, après réticulation ou vulcanisation).

Les caractéristiques précitées de la présente invention, ainsi que d'autres, seront mieux comprises à la lecture de la description suivante de plusieurs exemples de réalisation de l'invention, donnés à titre illustratif et non limitatif.

### III. EXEMPLES DE REALISATION DE L'INVENTION

La formulation des compositions T1, A et B est décrite dans le tableau I, celle des compositions C et T2 dans le tableau II.

Les compositions A à C sont conformes à l'invention en ce que la matrice élastomère comprend du caoutchouc naturel et au plus 50% en masse d'un élastomère thermoplastique styrénique insaturé conforme à l'invention. Elles diffèrent entre elles par le taux de l'élastomère thermoplastique styrénique insaturé ou la nature de la charge. Les compositions A et B diffèrent de la composition C notamment en ce que le noir de carbone est la charge renforçante majoritaire dans les compositions A et B tandis que dans la composition C la silice est la charge renforçante majoritaire. La composition T1 dans laquelle le noir de carbone est la charge renforçante majoritaire et la matrice élastomère contient 100% de caoutchouc naturel est la composition témoin des compositions A et B. La composition T2 dans laquelle la silice est la charge renforçante majoritaire et la matrice élastomère contient 100% de caoutchouc naturel est la composition témoin de la composition C.

Les compositions T1, T2, A, B et C sont préparées conformément au procédé décrit précédemment.

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, comme bande de roulement de pneumatique.

Les résultats sont consignés dans le tableau III pour les compositions A et B et la composition témoin T1, dans le tableau IV pour la composition C et la composition témoin T2.

Dans le cas où la charge renforçante est majoritairement un noir de carbone, les résultats qui figurent dans le tableau III montrent une très forte amélioration de la résistance à la propagation de fissure pour A et B comparativement au témoin T1. Cette amélioration est observée aussi bien à 20°C qu'à 80°C pour A. Cette polyvalence en température démontre une bonne résistance à la propagation de fissure pour A pour une large gamme de température à laquelle peut être exposée une bande de roulement.
Lorsque la charge renforçante est majoritairement une silice, les résultats consignés dans le tableau IV mettent en évidence une forte amélioration de la résistance à la propagation de fissures de C conforme à l'invention comparativement au témoin T2.

Des bandes de roulement à base des compositions A à C permettent d'améliorer significativement la durée de vie de pneumatiques, puisque ces pneumatiques deviennent beaucoup moins sensibles à la propagation de fissure au niveau de leur bande de roulement.

**Tableau I**

| | **T1** | **A** | **B** | **D** |
|---|---|---|---|---|
| NR (1) | 100 | 60 | 70 | 60 |
| SIS (2) | - | 40 | 30 | - |
| SBIS (3) | | | | 40 |
| silice (4) | 15 | 15 | 15 | 15 |
| noir de carbone (5) | 40 | 40 | 40 | 40 |
| antioxydant | 2.5 | 2.5 | 2.5 | 2.5 |
| paraffine | 1 | 1 | 1 | 1 |
| PEG (6) | 2.5 | 2.5 | 2.5 | 2.5 |
| acide stéarique | 1 | 1 | 1 | 1 |
| ZnO | 2.7 | 2.7 | 2.7 | 2.7 |
| CBS (7) | 1 | 1 | 1 | 1 |
| soufre | 1.7 | 1.7 | 1.7 | 1.7 |

| | | | | |
|---|---|---|---|---|
| (1) caoutchouc naturel (2) SIS « D1161 » commercialisé par Kraton (3) SBIS « D1170 » commercialisé par Kraton (4) « Ultrasil VN3 » commercialisé par Evonik (5) N115 (6) polyéthylène glycol de Mn 6000-20000 g/mol de Sasol Mari (7) N-cyclohexyl-2-benzothiazol-sulfénamide, « Santocure CBS », commercialisé par Flexsys | | | | |

**Tableau II**

| | **T2** | **C** |
|---|---|---|
| NR (1) | 100 | 60 |
| SIS (2) | | 40 |
| silice (3) | 15 | 15 |
| silice (4) | 47 | 47 |
| Silane (5) | 4 | 4 |
| DPG (6) | 1 | 1 |
| antioxydant | 2.5 | 2.5 |
| paraffine | 1 | 1 |
| PEG (7) | 2.5 | 2.5 |
| acide stéarique | 1 | 1 |
| ZnO | 2.7 | 2.7 |
| CBS (8) | 1 | 1 |
| soufre | 1.7 | 1.7 |

| | | |
|---|---|---|
| (1) caoutchouc naturel (2) SIS « D1161 » commercialisé par Kraton (3) « Ultrasil VN3 » commercialisé par Evonik (4) « Zeosil 1165 MP » de Rhodia (type HDS) (5) TESPT « Si69 » de la société de Evonik (6) diphénylguanidine « Perkacit » DPG de la société Flexsys (7) polyéthylène glycol de Mn 6000-20000 g/mol de Sasol Mari (8) N-cyclohexyl-2-benzothiazol-sulfénamide, « Santocure CBS », commercialisé par Flexsys | | |

**Tableau III**

| Résistance à la propagation de fissure | **T1** | **A** | **B** | **D** |
|---|---|---|---|---|
| à 20°C | 100 | 475 | 185 | Non mesuré |
| à 60°C | 100 | 372 | Non mesuré | 372 |
| à 80°C | 100 | 500 | Non mesuré | Non mesuré |

**Tableau IV**

| Résistance à la propagation de fissure | **T2** | **C** |
|---|---|---|
| à 60°C | 100 | 250 |

## Revendications

1. Bande de roulement pour pneumatique qui comprend une composition à base d'au moins :
- une matrice élastomère comprenant un polyisoprène et un élastomère thermoplastique styrénique insaturé qui représente au plus 50% en masse de la matrice élastomère, lequel élastomère thermoplastique styrénique insaturé comprend au moins un segment rigide styrénique et au moins un segment souple isoprénique, lequel l'au moins un segment souple isoprénique a une température de transition vitreuse inférieure à -20°C,
- une charge renforçante,
- un système de réticulation,
dans laquelle, le taux d'élastomère thermoplastique styrénique insaturé représente de 5 à 50% en masse de la masse de la matrice élastomère.

2. Bande de roulement selon la revendication 1, dans laquelle le polyisoprène représente plus de 50% de la différence entre la masse de la matrice élastomère et la masse de l'élastomère thermoplastique styrénique insaturé.

3. Bande de roulement selon la revendication 1 ou 2, dans laquelle le polyisoprène comporte un taux massique de liaison 1,4-cis d'au moins 90% de la masse du polyisoprène, le polyisoprène étant préférentiellement le caoutchouc naturel, un polyisoprène de synthèse ou leur mélange.

4. Bande de roulement selon l'une quelconque des revendications 1 à 3, dans laquelle le taux d'élastomère thermoplastique styrénique insaturé représente de 10 à 45% en masse, plus préférentiellement de 20 à 45% en masse, encore plus préférentiellement de 25 à 45% en masse de la masse de la matrice élastomère.

5. Bande de roulement selon l'une quelconque des revendications 1 à 4, dans laquelle l'au moins un segment rigide styrénique présente une température de transition vitreuse supérieure à 80°C.

6. Bande de roulement selon l'une quelconque des revendications 1 à 5, dans laquelle l'au moins un segment rigide styrénique est un bloc polystyrène.

7. Bande de roulement selon l'une quelconque des revendications 1 à 6, dans laquelle l'au moins un segment souple isoprénique est un bloc polyisoprène.

8. Bande de roulement selon l'une quelconque des revendications 1 à 7, dans laquelle l'élastomère thermoplastique styrénique insaturé est un dibloc comportant un seul segment rigide styrénique relié à un seul segment souple isoprénique, l'élastomère thermoplastique styrénique insaturé étant préférentiellement un copolymère bloc styrène/ isoprène (SI).

9. Bande de roulement selon l'une quelconque des revendications 1 à 7, dans laquelle l'élastomère thermoplastique styrénique insaturé comprend au moins deux segments rigides styréniques, l'élastomère thermoplastique styrénique insaturé étant préférentiellement un tribloc constitué de deux segments rigides styréniques et d'un segment souple isoprénique, de préférence un copolymère bloc styrène/ isoprène/ styrène (SIS).

10. Bande de roulement selon l'une quelconque des revendications 1 à 9, dans laquelle la charge renforçante comprend un noir de carbone et/ou une charge inorganique renforçante, de préférence une silice.

11. Bande de roulement selon la revendication 10, dans laquelle le noir de carbone présente une surface spécifique BET d'au moins 90 m2/g, préférentiellement d'au moins 100 m2/g.

12. Procédé pour préparer une bande de roulement selon l'une quelconque des revendications 1 à 11, qui comprend les étapes suivantes :
- - ajouter au cours d'une première étape dite non productive à la matrice élastomère, la charge renforçante, le cas échéant l'agent de couplage, en malaxant thermomécaniquement jusqu'à atteindre une température maximale comprise entre 130 et 200°C,
- refroidir l'ensemble à une température inférieure à 70°C,
- incorporer ensuite le système de réticulation,
- malaxer le tout jusqu'à une température maximale inférieure à 90°C pour obtenir un mélange,
- puis calandrer ou extruder le mélange obtenu pour former une bande de roulement.

13. Pneumatique comportant une bande de roulement selon l'une quelconque des revendications 1 à 11.

14. Composition comme définie selon l'une quelconque des revendications 1 à 10, avec la condition que si la charge renforçante comprend un noir de carbone, le noir de carbone présente une surface spécifique BET supérieure ou égale à 90 m2/g.

15. Procédé pour préparer une composition de caoutchouc selon la revendication 14, qui comprend les étapes suivantes :
- malaxer thermomécaniquement la matrice élastomère, la charge renforçante, le cas échéant l'agent de couplage, jusqu'à atteindre une température maximale comprise entre 130°C et 200°C;
- refroidir l'ensemble à une température inférieure à 70°C ;
- incorporer ensuite le système de réticulation ;
- malaxer le tout jusqu'à une température maximale inférieure à 90°C pour obtenir une composition de caoutchouc.

## Patentansprüche

1. Reifenlauffläche, die eine Zusammensetzung auf Basis von mindestens
- einer Elastomermatrix, umfassend ein Polyisopren und ein ungesättigtes thermoplastisches Styrolelastomer, das höchstens 50 Massen-% der Elastomermatrix ausmacht, wobei das ungesättigte thermoplastische Styrolelastomer mindestens ein Styrol-Hartsegment und mindestens ein Isopren-Weichsegment umfasst, wobei das mindestens eine flexible Isoprensegment eine Glasübergangstemperatur von weniger als -20 °C aufweist,
- einem verstärkenden Füllstoff,
- einem Vernetzungssystem,
wobei der Gehalt an ungesättigtem thermoplastischem Styrolelastomer 5 bis 50 Massen-% der Masse der Elastomermatrix ausmacht,
umfasst.

2. Lauffläche nach Anspruch 1, wobei das Polyisopren mehr als 50 % der Differenz zwischen der Masse der Elastomermatrix und der Masse des ungesättigten thermoplastischen Styrolelastomers ausmacht.

3. Lauffläche nach Anspruch 1 oder 2, wobei das Polyisopren einen Massengehalt an cis-1,4-Bindungen von mindestens 90 % der Masse des Polyisoprens umfasst, wobei es sich bei dem Polyisopren vorzugsweise um Naturkautschuk, ein synthetisches Polyisopren oder eine Mischung davon handelt.

4. Lauffläche nach einem der Ansprüche 1 bis 3, wobei der Gehalt an ungesättigtem thermoplastischem Styrolelastomer 10 bis 45 Massen-%, weiter bevorzugt 20 bis 45 Massen-%, noch weiter bevorzugt 25 bis 45 Massen-%, der Masse der Elastomermatrix beträgt.

5. Lauffläche nach einem der Ansprüche 1 bis 4, wobei mindestens ein Styrol-Hartsegment eine Glasübergangstemperatur von mehr als 80 °C aufweist.

6. Lauffläche nach einem der Ansprüche 1 bis 5, wobei es sich bei mindestens einem Styrol-Hartsegment um einen Polystyrolblock handelt.

7. Lauffläche nach einem der Ansprüche 1 bis 6, wobei es sich bei mindestens einem Isopren-Weichsegment um einen Polyisoprenblock handelt.

8. Lauffläche nach einem der Ansprüche 1 bis 7, wobei es sich bei dem ungesättigten thermoplastischen Styrolelastomer um einen Diblock, der ein einziges Styrol-Hartsegment, das an ein einziges Isopren-Weichsegment gebunden ist, umfasst, handelt, wobei es sich bei dem ungesättigten thermoplastischen Styrolelastomer vorzugsweise um ein Styrol/Isopren(SI)-Blockcopolymer handelt.

9. Lauffläche nach einem der Ansprüche 1 bis 7, wobei das ungesättigte thermoplastische Styrolelastomer mindestens zwei Styrol-Hartsegmente umfasst, wobei es sich bei dem ungesättigten thermoplastischen Styrolelastomer vorzugsweise um einen Triblock, der zwei Styrol-Hartsegmente und ein einziges Isopren-Weichsegment umfasst, und vorzugsweise um ein Styrol/Isopren-/Styrol(SIS)-Blockcopolymer handelt.

10. Lauffläche nach einem der Ansprüche 1 bis 9, wobei der verstärkende Füllstoff einen Ruß und/oder einen verstärkenden anorganischen Füllstoff, vorzugsweise eine Kieselsäure, umfasst.

11. Lauffläche nach Anspruch 10, wobei der Ruß eine spezifische BET-Oberfläche von mindestens 90 m²/g und vorzugsweise mindestens 100 m²/g aufweist.

12. Verfahren zur Herstellung der Lauffläche nach einem der Ansprüche 1 bis 11, das die folgenden Schritte umfasst:
- im Lauf eines ersten, als nichtproduktiv bezeichneten Schritts Zugeben des verstärkenden Füllstoffs und gegebenenfalls des Kupplungsmittels zu dem Dienelastomer durch thermomechanisches Kneten bis zum Erreichen einer Höchsttemperatur zwischen 130 und 200 °C,
- Abkühlen des großen Ganzen auf eine Temperatur von weniger als 70 °C,
- anschließendes Einarbeiten des Vernetzungssystems,
- Kneten des Ganzen bis zu einer Höchsttemperatur von weniger als 90 °C zum Erhalt einer Mischung,
- anschließendes Kalandrieren oder Extrudieren der erhaltenen Mischung zur Bildung einer Lauffläche.

13. Reifen, umfassend eine Lauffläche nach einem der Ansprüche 1 bis 11.

14. Zusammensetzung gemäß einem der Ansprüche 1 bis 10 mit der Maßgabe, dass dann, wenn der verstärkende Füllstoff einen Ruß umfasst, der Ruß eine spezifische BET-Oberfläche größer oder gleich 90 m²/g aufweist.

15. Verfahren zur Herstellung einer Kautschukzusammensetzung nach Anspruch 14, das die folgenden Schritte umfasst:
- thermomechanisches Kneten der Elastomermatrix, des verstärkenden Füllstoffs und gegebenenfalls des Kupplungsmittels bis zum Erreichen einer Höchsttemperatur zwischen 130 und 200 °C,
- Abkühlen des Ganzen auf eine Temperatur von weniger als 70 °C,
- anschließendes Einarbeiten des Vernetzungssystems,
- Kneten des Ganzen bis zu einer Höchsttemperatur von weniger als 90 °C zum Erhalt einer Kautschukzusammensetzung.

## Claims

1. Tyre tread which comprises a composition based on at least:
- an elastomer matrix comprising a polyisoprene and an unsaturated thermoplastic styrene elastomer which represents at most 50% by weight of the elastomer matrix, which unsaturated thermoplastic styrene elastomer comprises at least one rigid styrene segment and at least one flexible isoprene segment, which at least one flexible isoprene segment has a glass transition temperature of less than -20°C,
- a reinforcing filler,
- a crosslinking system,
wherein the content of unsaturated thermoplastic styrene elastomer represents from 5 to 50% by weight of the weight of the elastomer matrix.

2. Tread according to Claim 1, wherein the polyisoprene represents more than 50% of the difference between the weight of the elastomer matrix and the weight of the unsaturated thermoplastic styrene elastomer.

3. Tread according to Claim 1 or 2, wherein the polyisoprene comprises a content by weight of cis-1,4- bonds of at least 90% of the weight of the polyisoprene, the polyisoprene being preferentially natural rubber, a synthetic polyisoprene or their mixture.

4. Tread according to any one of Claims 1 to 3, wherein the content of unsaturated thermoplastic styrene elastomer represents from 10 to 45% by weight, more preferably from 20 to 45% by weight and more preferably still from 25 to 45% by weight of the weight of the elastomer matrix.

5. Tread according to any one of Claims 1 to 4, wherein the at least one rigid styrene segment exhibits a glass transition temperature of greater than 80°C.

6. Tread according to any one of Claims 1 to 5, wherein the at least one rigid styrene segment is a polystyrene block.

7. Tread according to any one of Claims 1 to 6, wherein the at least one flexible isoprene segment is a polyisoprene block.

8. Tread according to any one of Claims 1 to 7, wherein the unsaturated thermoplastic styrene elastomer is a diblock comprising just one rigid styrene segment connected to just one flexible isoprene segment, the unsaturated thermoplastic styrene elastomer being preferentially a styrene/isoprene (SI) block copolymer.

9. Tread according to any one of Claims 1 to 7, wherein the unsaturated thermoplastic styrene elastomer comprises at least two rigid styrene segments, the unsaturated thermoplastic styrene elastomer being preferentially a triblock composed of two rigid styrene segments and of one flexible isoprene segment, preferably a styrene/isoprene/styrene (SIS) block copolymer.

10. Tread according to any one of Claims 1 to 9, wherein the reinforcing filler comprises a carbon black and/or a reinforcing inorganic filler, preferably a silica.

11. Tread according to Claim 10, wherein the carbon black exhibits a BET specific surface of at least 90 m²/g, preferably of at least 100 m²/g.

12. Process for preparing a tread according to any one of Claims 1 to 11, which comprises the following stages:
- adding, during a first "non-productive" stage, to the elastomer matrix, the reinforcing filler and, if appropriate, the coupling agent, by kneading thermomechanically until a maximum temperature of between 130°C and 200°C is reached,
- cooling the combined mixture to a temperature of less than 70°C,
- subsequently incorporating the crosslinking system,
- kneading everything up to a maximum temperature of less than 90°C in order to obtain a mixture,
- then calendering or extruding the mixture obtained in order to form a tread.

13. Tyre comprising a tread according to any one of Claims 1 to 11.

14. Composition as defined according to any one of Claims 1 to 10, with the condition that, if the reinforcing filler comprises a carbon black, the carbon black exhibits a BET specific surface of greater than or equal to 90 m²/g.

15. Process for preparing a rubber composition according to Claim 14, which comprises the following stages:
- thermomechanically kneading the elastomer matrix, the reinforcing filler and, if appropriate, the coupling agent until a maximum temperature of between 130°C and 200°C is reached;
- cooling the combined mixture to a temperature of less than 70°C;
- subsequently incorporating the crosslinking system;
- kneading everything up to a maximum temperature of less than 90°C, in order to obtain a rubber composition.
